# EUROPEAN PATENT SPECIFICATION

(11) **EP 1 281 877 B1**
(45) Date of publication and mention of the grant of the patent: **06.07.2005**
(21) Application number: 02380096.4
(22) Date of filing: 13.05.2002
(51) Int. Cl.: F16B 43/00, F16B 37/04

(54) **Device for the provisional retention of a screw assembly on a guide rail**
Vorrichtung zum vorübergehenden Halten von Schraubenanordnung an einer Führungsschiene
Dispositif pour tenir temporaire un ensemble de vis sur un rail de guidage

(30) Priority: 30.07.2001 ES 200101772
(43) Date of publication of application: 05.02.2003
(73) Proprietor: Isofix, S.L., 08192 Sant Quirze Del Valles (ES)
(72) Inventor: Yanguas Llobet, David, 08192 sant Quirze Del Valles (ES)
(74) Representative: SUGRANES - VERDONCES - FERREGÜELA

(56) References cited:
- EP-A- 0 556 438
- EP-A- 1 024 302
- WO-A-91/05173
- DE-A- 19 916 989
- FR-A- 2 193 438
- FR-A- 2 719 093

## Description

### Technical sector of the invention

The present invention refers to a device for the provisional retention of a screw assembly in a guide rail; the mentioned guide rail having two mutually facing wings, and said screw assembly comprising a shaped head integrally joined to a threaded rod, a lock washer and a locknut.

### Background to the invention

At present, the use of screw assemblies for carrying out the securing of different elements on guide rails arranged on walls or ceilings is common practice.

Said screw assemblies generally have a shaped head which is integral to the threaded rod and which can be inserted frontally into the guide rail so that once the head is arranged behind the guide rail wings and turned laterally, it acts as a stop against the lateral walls of said guide rail, making any movement in the turning direction of the nut impossible during its coupling on the rod.

When the nut is tightened, the immobilization on the guide rail of the screw assembly and the part to be secured is attained by same.

The assembling of the screw assembly on a guide rail is particularly awkward when the latter is positioned vertically; this is due to the need to establish the tightening of the nut, at least, insofar as is necessary, to ensure the provisional retention of the screw assembly in the appropriate area of the guide rail and prevent its involuntary movement along the guide rail.

If the tightening of the screw is not established, the screw assembly will slide, by its own weight, towards the lower area of the guide rail, moving from the chosen assembly point, with the risk of projecting out at the lower end of the guide rail and causing physical and/or material damage, especially when working very high up, for example on building facades.

The usefulness and advantages of having a threaded rod provisionally retained are well known in the art, as exposed in the following documents.

Specifically, the document EP A 1 024 302 discloses a retention element for anchoring a thread with a nut to a rail. It consists in a multiple piece device, comprising a fixing element with a through hole, a stretching element with a hole, throughout the thread is passed. The stretching element and the fixing element interact by pressing to the sights of the rail to fix the assembly. By means of the twist of the fixing element, and helped by a plate, the assembly can slide into the rail. The assembly proposed in EP A 1 024 302 presents the problem that it is difficult to manufacture, to use and to apply due to the need of three pieces to retain a bolt in a previously position on a rail.

Also in EP A 0 556 438, it is disclosed a fastening element which is warped, deformed, bended or twisted to form a narrow hole throughout a thread is introduced and is fastened maintained, allowing this disposition, a provisional retention in any place. Once the thread member has been tightened, the narrow hole is restored avoiding, at the same time, the damage of the corresponding element due to rubbing. Indeed, EP A 0 556 438 is focalized to the problem of preventing the looseness of a tightened bolt, of providing a wide area contact and reliably to retain the bolt head if the bolt hole, where it must be placed is too large.

Another embodiment disclosing a device to fix a piece with a head in a U-profile, is that disclosed in FR A 2 719 093. The device is characterized in that over a thread cap it is disposed a cage provided with at least a strip elastically deformable, used for retaining a rod in the U-profile and avoiding the slide of the device along said profile.

### Explanation of the invention

The device object of this invention, being extremely simple to construct, has several features which ensure the provisional retention of the screw assembly in the guide rail, from its assembling on said guide rail to establishing the tightening of the corresponding nut.

According to the invention, this device comprises a flat washer of flexible material, with several protuberances inside, which, with their ends, work against the rod threads, being immobilized in the area of the rod next to the head in form of a curved convex double cam symmetric in respect of a diagonal line that pass through its centre, so that when the head is inserted manually inside the guide rail by externally applying manual pressure in the same penetration direction, said flat washer acts frontally against the outer surface of the guide rail wing by elastic deformation, which enables the screw to be turned manually in order to cause the head to make contact against the inner surface of said wings, the assembly being retained when the manual pressure ceases, and the washer, due to the spring effect, tends to return to its flat position, pressing against the inner part of the guide rail, and thus preventing the unwanted movement of the screw along said guide rail.

It has been envisaged that the inner protuberances of the flat washer end in several inclining end portions which engage the helical groove defined by the rod thread and with their ends act frontally against the lateral surface of the screw thread.

The said inner protuberances of the flat washer will be conveniently dimensioned in order to ensure that the end portions can engage the helical groove defined by the rod thread, and that, in the assembling position on the rod, the washer can not trace movements in a radial direction nor move longitudinally in the extraction direction precisely because of the frontal operation of the end portions of the inner protuberances against the side surface of the threading.

The assembling of the flat washer on the rod can be done by screwing, so that the end portions of the inner protuberances keep following the helical groove of the threading, or by pressure, so that when the threaded rod is inserted inside the flat washer and exerts longitudinal pressure on the same in the direction of the incline of the end portions of the inner protuberances, the latter go on flexing with respect to the washer body, insofar as is necessary, in order to jump the successive spires or turns of the threading, until attaining the desired assembling position in the threaded rod.

The flat washer will be arranged in the area of the rod close to the head, as the distance existing between both must be small enough to ensure that the flexion of the washer causes the rod head to push against the inner surface of the guide rail wings, preventing the involuntary sliding of the screw assembly in the guide rail and enabling the operator to move it manually in the guide rail to the desired assembling position.

Since there are guide rails with different geometries on the market, it has been envisaged that the device object of the invention comprises a tubular sleeve for discretional use and intended for assembling on the threaded rod, between the screw head and the flat washer.

This tubular sleeve is shorter in length than the thickness defined by the guide rail wings between the areas of contact of the screw head and the flat washer. Therefore, the aim of this tubular sleeve is to act as a stop between the head and the flat washer so that the latter, once it is fully assembled with the sleeve, is in the right position for achieving a certain amount of pressure on the guide rail wings.

### Brief description of the drawings

- Figure 1 shows a perspective view of the flat washer of the device object of the invention.
- Figure 2 shows a perspective view of an embodiment example of the guide rail and a quartering of a screw assembly with the flat washer represented in the previous figure.
- Figures 3 and 4 show successive phases of the assembling of the screw assembly in the guide rail represented in figure 2, being possible to observe in figure 4 the screw assembly retained in the guide rail by the action of the flat screw.
- Figure 5 shows a diametrical section of the flat washer assembled on the threaded rod, in which the working of the end portions of the inner protuberances on the rod threading can be observed.
- Figure 6 shows a perspective view of the flat washer assembled on the threaded rod.
- Figure 7 shows an aligned quartering perspective of a screw assembly with a variation of the device which deals with the provisional retention of same in the guide rail.
- Figure 8 shows a plan view of the elements of the previous figure in assembled position.

### Detailed description of the drawings

As can be observed in the referred to figures, the device object of the invention comprises a flat washer (1), preferably steel, which inside, presents several protuberances (11) arranged radially and which finish in several inclining end portions (12).

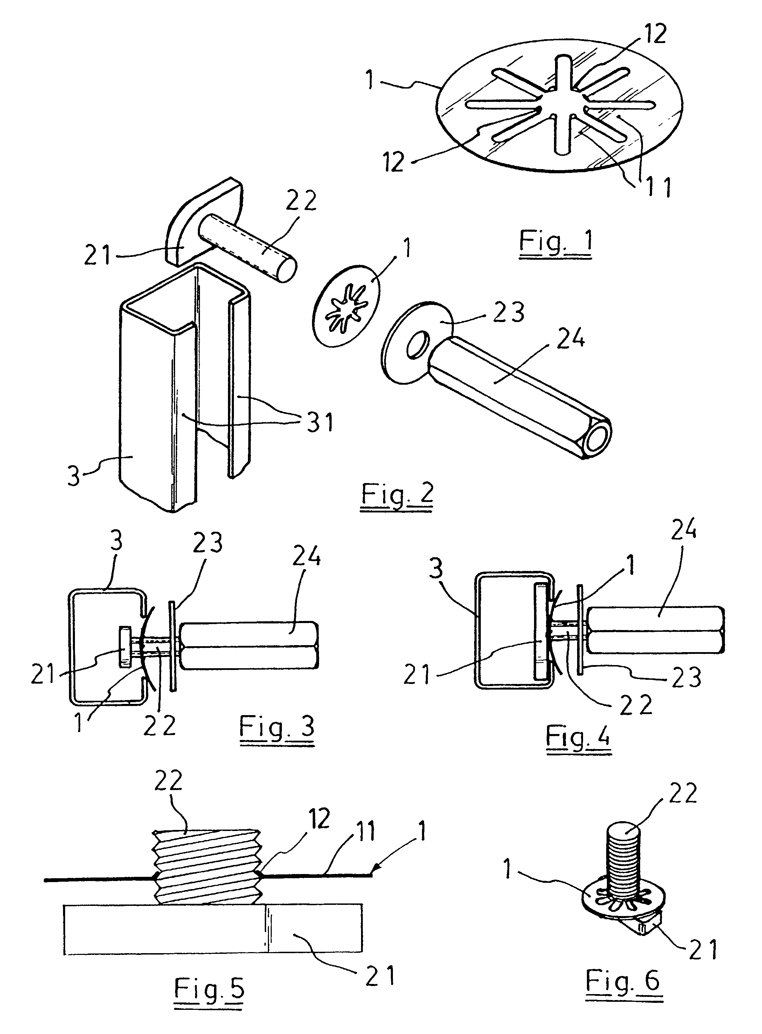

The aim of this flat washer is to achieve the provisional retention of a screw assembly in a guide rail. In the embodiment example shown in figures 2, 3 and 4, the screw assembly has a shaped head (21), in form of a curved convex double cam, integral to a threaded rod (22), a flat washer (23) and a nut (24), which in this embodiment example has a configuration in the form of a hexagonal sleeve.

In turn, the guide rail (3) has several mutually facing wings (31) in which the mounting of the screw assembly is established.

As can be observed in figures 3, 4, 5 and 6, the flat washer (1) is assembled on the threaded rod (22) being immobilised about the latter, in an area close to the head (21), owing to the inclination of the end portions (12) in the helical groove of the threaded rod (22) and the frontal working of the latter's ends against the threading of mentioned rod (22).

On manually inserting the head of the threaded rod (22) inside the guide rail (3), as shown in figure 3, the flat washer (1) makes contact with the outer surface of the guide rail wings (31) by elastically flexing, because of the external manual pressure exerted in the same penetration direction.

Once the head (21) is turned inside the guide rail (3) to the position represented in figure 4, when it stops pressing on the rod (22) the flat washer (1) tends to recover its initial flatness, causing the head (21) to push against the inner surface of the guide wings (31).

This pressure ensures the provisional retention of the screw assembly in the guide rail (3) without needing to establish the tightening of the nut (24), nevertheless making it possible, with a simple manual unblocking pressure, that is to say, pressing against the rod (22) towards the inside of the guide rail (3), for the operator to move the screw assembly along the guide rail (3) to any different position, in particular to the desired assembling position.

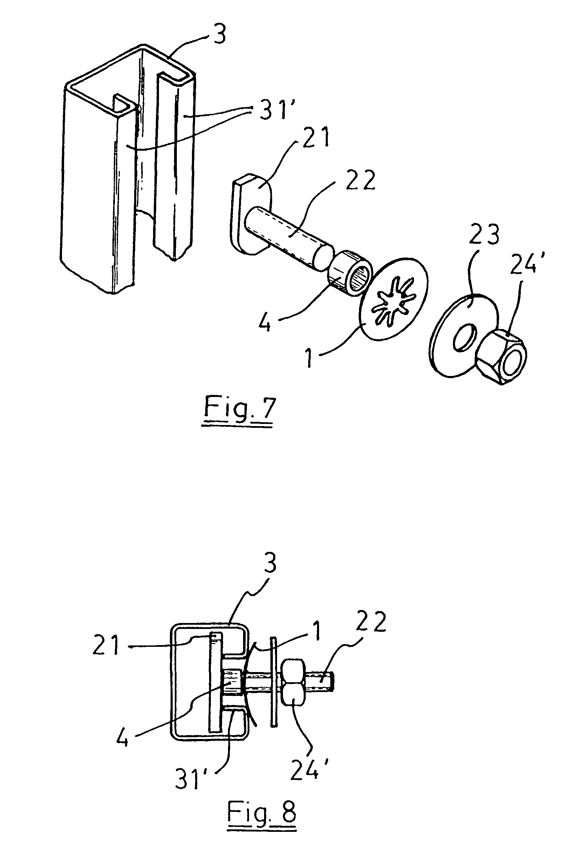

In the embodiment example shown in figures 7 and 8 it has been envisaged that the device object of the invention comprises, as well as the flat washer (1), a tubular sleeve (4) intended for assembling on the threaded rod (22) by acting as a stop or buffer between the head (21) and the flat washer (1).

This tubular sleeve will be employed in those cases in which the guide rail (3) has several wings (31') of greater thickness, as shown in figures 7 and 8, ensuring that the distance between the head (21) and the flat washer (1), when the latter is in rest position, is less than the distance existing between the contact areas of the same on the inner and outer surfaces of the mentioned wings (31').

As can be observed in figure 8, once the assembling of the screw assembly in the guide rail (3) has been done, the flat washer (1) will maintain a certain amount of flexion and achieve the retention of the screw in the guide rail (3) without needing to establish the tightening of the nut (24'), which in this embodiment example is a conventional hexagonal nut.

## Claims

1. Device for the provisional retention of a screw assembly in a guide rail; said guide rail (3) having two wings (31 or 31') mutually facing one another, and said screw assembly comprising a head (21) shaped in form of curved convex double cam, symmetric in respect of a diagonal line that pass through its centre, which is integrally joined to a threaded rod (22), a lock washer (23) and a locknut (24), **characterised in that** it further comprises a flat washer (1) of a flexible material, with several protuberances (11) having inner ends which work against the rod (22) threading, the washer (1) being immobilized about the area of the rod (22) close to the head (21), and acting frontally against the outer surface of the wings (31, 31') of the guide rail (3) by elastic deformation, in a position of introduction of the head (21) inside the guide rail (3), and causing the head to press against the inner part of the guide rail (3), in a position of retention of the assembly.

2. Device, according to the previous claim, **characterised in that** each of the inner protuberances (11) of the flat washer (1) end in an inclining end portion (12) which engages the helical groove of the rod (22) threading and, with their ends, acting frontally against the lateral surface of the threading.

3. Device, according to the previous claims, **characterised in that** it comprises a tubular sleeve (4) assembled on the threaded rod (22) and being arranged between the head (21) and the flat washer (1), said sleeve being shorter in length than the thickness defined by the wings (31') of the guide rail (3) between the areas of contact of the head (21) and the flat washer (1).

## Patentansprüche

1. Vorrichtung zum vorläufigen Sicherung einer Schraubenanordnung in einer Führungsschiene, wobei die Führungsschiene (3) zwei Flügel (31 oder 31') hat, die einander gegenüberliegen, und die Schraubenanordnung einen Kopf (21), der die Form einer gekrümmten konvexen Doppelnocke hat, die symmetrisch bezüglich einer durch ihren Mittelpunkt verlaufenden diagonalen Linie ist, der integral mit einem Gewindebolzen (22) verbunden ist, eine Sicherungsscheibe (23) und eine Sicherungsmutter (24) aufweist, **dadurch gekennzeichnet, dass** sie ferner eine ebene Scheibe (1) aus einem flexiblen Material mit mehreren Ausstülpungen (11) mit inneren Enden, die dem Gewinde des Bolzens (22) entgegenwirken, aufweist, wobei die Scheibe (1) im Bereich des Bolzens (22) nahe am Kopf (21) in einer Position, in der der Kopf (21) in die Führungsschiene (3) eingeführt ist, unbeweglich ist und frontal gegen die Außenoberfläche der Flügel (31, 31') der Führungsschiene (3) durch elastische Verformung wirkt und wodurch der Kopf in einer Position zur Sicherung der Anordnung veranlasst wird, gegen den inneren Teil der Führungsschiene (3) zu pressen.

2. Vorrichtung nach dem vorigen Anspruch, **dadurch gekennzeichnet, dass** jede der inneren Ausstülpungen (11) der ebenen Scheibe (1) in einem ansteigenden Endabschnitt (12) endet, der in die Helixnut des Gewindebolzens (22) eingreift, und mit ihren Enden frontal gegen die seitlichen Oberflächen des Gewindes wirken.

3. Vorrichtung nach den vorigen Ansprüchen, **dadurch gekennzeichnet, dass** sie eine rohrförmige Hülse (4) aufweist, die auf den Gewindebolzen (22) installiert und zwischen dem Kopf (21) und der ebenen Scheibe (1) angeordnet wird, wobei die Hülse eine kürzere Länge hat als die durch die Flügel (31') der Führungsschiene (3) zwischen den Kontaktbereichen des Kopfes (21) und der ebenen Scheibe (1) definierte Dicke.

## Revendications

1. Dispositif pour la retenue provisoire d'un ensemble de vis sur un rail de guidage; ledit rail de guidage (3) présentant deux ailes (31 ou 31') opposées l'une à l'autre, et ledit ensemble de vis comprenant une tête (21) ayant la forme d'une double came convexe et courbe, symétrique par rapport à une ligne diagonale qui traverse son centre, qui est unie intégralement à une tige filetée (22), une rondelle de blocage (23), et un écrou de fixation (24), **caractérisé en ce qu'**il comprend en plus une rondelle plate (1) en un matériel flexible, avec une pluralité de protubérances dont les extrémités intemes agissent contre la tige filetée (22), ladite rondelle (1) étant immobilisée dans la zone de la tige filetée (22), près de la tête (21), et agissant frontalement contre la superficie externe des ailes (31, 31') du rail de guide (3) par déformation élastique, dans une position d'introduction de la tête à l'inténeur du rail de guide (3), et qui provoque le contact de la tête contre la partie inteme du rail guide (3), dans une position de retenue de l'ensemble.

2. Dispositif selon la revendication précédente, **caractérisé en ce que** chacune des protubérances internes (11) de la rondelle plate (1) se termine par une portion d'extrémité inclinée (12), qui s'engage dans la rainure hélicoïdale de la tige filetée (22) et qui, par son extrémité, agit frontalement contre la superficie latérale du filetage.

3. Dispositif selon les revendications précédentes, **caractérisé en ce qu'**il comprend un manchon tubulaire (4) monté sur la tige filetée (22) et disposé entre la tête (21) et la rondelle plate (1), ledit manchon présentant une longueur plus courte que l'épaisseur définie par les ailes (31') du rail de guide (3) entre les zones de contact de la tête (21) et la rondelle plate (1).
